# EUROPÄISCHE PATENTSCHRIFT

(11) **EP 3 161 299 B1**
(45) Veröffentlichungstag und Bekanntmachung des Hinweises auf die Patenterteilung: **01.08.2018**
(21) Anmeldenummer: 15723468.3
(22) Anmeldetag: 08.05.2015
(51) Int. Cl.: F02M 21/02, F16K 31/06

(54) **GASVENTIL**
GAS VALVE
VANNE À GAZ

(30) Priorität: 26.06.2014 DE 102014212320
(43) Veröffentlichungstag der Anmeldung: 03.05.2017
(73) Patentinhaber: Robert Bosch GmbH, 70442 Stuttgart (DE)
(72) Erfinder: HAMMER, Uwe, 83059 Kolbermoor (DE); RIESCH, Tobias, 83661 Lenggries (DE)
(86) Internationale Anmeldenummer: PCT/EP2015/060170
(87) Internationale Veröffentlichungsnummer: WO 2015/197245

(56) Entgegenhaltungen:
- EP-A1- 2 253 827
- DE-A1-102009 002 836
- DE-A1-102010 043 641
- HEFFEL J W: "NOx emission reduction in a hydrogen fueled internal combustion engine at 3000 rpm using exhaust gas recirculation", INTERNATIONAL JOURNAL OF HYDROGEN ENERGY, ELSEVIER SCIENCE PUBLISHERS B.V., BARKING, GB, Bd. 28, Nr. 11, 1. November 2003 (2003-11-01), Seiten 1285-1292, XP004433964, ISSN: 0360-3199, DOI: 10.1016/S0360-3199(02)00289-6

## Beschreibung

Die Erfindung betrifft ein Gasventil, wie es insbesondere als Dosierventil für ein gasförmiges Medium eingesetzt werden kann.

### Stand der Technik

Die Erfindung geht von einem Gasventil aus, wie es beispielsweise aus der Offenlegungsschrift DE 10 2009 002 836 A1 bekannt ist. Ein solches Gasventil wird als Dosierventil für ein gasförmiges Medium eingesetzt, beispielsweise zur Dosierung von gasförmigem Kraftstoff, der einer Brennkraftmaschine zugeführt werden soll. Das bekannte Gasventil ist hierbei eines, das elektromagnetisch betrieben wird und als Dichtelement einen Ventilteller aufweist, der bezüglich seiner Symmetrieachse beweglich innerhalb des Gasventils angeordnet ist. Der Ventilteller wirkt mit einem Ventilsitz zusammen, so dass beim Abheben des Ventiltellers vom Ventilsitz ein Einströmungsquerschnitt aufgesteuert wird, durch den das gasförmige Medium strömen kann, wobei die Dosierung über die Öffnungsdauer des Gasventils erfolgt. Die Bewegung des Ventiltellers erfolgt über die Kraft eines Elektromagneten, der zur Öffnung des Gasventils eingeschaltet und zum Schließen des Gasventils wieder ausgeschaltet wird, wobei das Schließen des Gasventils über eine entsprechende Schließfeder geschieht, die den Ventilteller beaufschlagt.

Das zu dosierende gasförmige Medium beaufschlagt die dem Ventilsitz abgewandte Seite des Ventiltellers und führt zu einer Schließkraft auf den Ventilteller. Diese Schließkraft muss durch den Elektromagneten überwunden werden, der den Ventilteller vom Ventilsitz abheben soll. Da der Gasdruck nicht immer gleich ist, sind unterschiedliche Öffnungskräfte erforderlich, was die Eindosierung des gasförmigen Mediums erschwert, da die Öffnungskraft und damit der Öffnungszeitpunkt vom Gasdruck des zu dosierenden gasförmigen Mediums abhängt. Darüber hinaus ist beim bekannten Gasventil der Öffnungsquerschnitt begrenzt, d. h. der Querschnitt, der durch die Bewegung des Ventiltellers aufgesteuert wird und durch den das gasförmige Medium strömt. Gerade bei Gasventilen, die einen gasförmigen Kraftstoff dosieren, ist es aber bei großen Motoren unbedingt erforderlich, die notwendige große Gasmenge in einer möglichst kurzen Zeit einzudosieren, um eine hohe Leistung der Brennkraftmaschine zu erreichen. Die DE 10 2010 043641 A1 und EP 2 253 827 A1 offenbaren weitere Elektromagnetventile zum Eindosieren von gasförmigen Medien.

### Offenbarung der Erfindung

Das erfindungsgemäße Gasventil weist demgegenüber den Vorteil auf, dass der Ventilteller zumindest näherungsweise kraftausgeglichen ist, d. h., dass sich die durch den Gasdruck des einzudosierenden gasförmigen Mediums ausgeübten Kräfte in Bewegungsrichtung des Ventiltellers zumindest näherungsweise aufheben. Darüber hinaus weist das erfindungsgemäße Gasventil den Vorteil auf, dass ein sehr großer Strömungsquerschnitt mit einem relativ geringen Hub des Ventiltellers aufgesteuert werden kann, wodurch ein großer Einströmquerschnitt mit geringem Hub und damit sehr schnell auf und zu geschaltet werden kann. Dazu weist das Gasventil einen Ventilteller auf, der im Gasventil bezüglich einer Längsachse bewegbar angeordnet ist und eine zentrale Öffnung zur Durchführung des gasförmigen Mediums aufweist. Der Ventilteller wirkt mit einer Ventilplatte zum Öffnen und Schließen des Gasventils zusammen, wobei eine erste umlaufende Dichtkante zwischen dem Ventilsitz und dem Ventilteller ausgebildet ist, die die zentrale Öffnung umgibt, wobei in der zentralen Öffnung eine erste vom gasförmigen Medium in Schließrichtung beaufschlagte Druckfläche ausgebildet ist. Weiter ist am Ventilteller eine zweite Druckfläche ausgebildet, die radial außerhalb der ersten umlaufenden Dichtkante ausgebildet ist und die ebenfalls vom gasförmigen Medium beaufschlagt ist. Zur Verbindung der beiden Druckflächen ist ein Verbindungskanal vorgesehen, der in der Ventilplatte ausgebildet ist. Die beiden Druckflächen am Ventilteller stehen einander gegenüber, so dass die durch das gasförmige Medium auf die Druckflächen ausgeübten Kräfte in Bewegungsrichtung des Ventiltellers einander entgegen gerichtet sind. Durch die Verbindung, die durch den in der Ventilplatte ausgebildeten Verbindungskanal geschaffen wird, ist sichergestellt, dass stets der gleiche Gasdruck an beiden Druckflächen anliegt.

Darüber hinaus ist durch die Druckbeaufschlagung von zwei Druckflächen am Ventilteller die Möglichkeit gegeben, einen großen Strömungsquerschnitt auf- und zuzusteuern, da das gasförmige Medium an verschiedenen Stellen des Ventiltellers anliegt. Dies eröffnet die Möglichkeit, über mehrere Dichtungen gleichzeitig einen Öffnungsquerschnitt aufzusteuern und eine entsprechend große Gasmenge dosieren zu können.

In einer ersten vorteilhaften Ausgestaltung der Erfindung ist die umlaufende Dichtkante als ein auf dem Ventilsitz angeordneter Steg ausgebildet, so dass über die erhöhte Flächenpressung eine sichere Abdichtung im Bereich der zentralen Öffnung gegeben ist.

In einer weiteren vorteilhaften Ausgestaltung strömt das gasförmige Medium über eine flexible Zuleitung in die zentrale Öffnung des Ventiltellers. Bevorzugt kann diese flexible Zuleitung durch einen Faltenbalg gebildet werden, der mit dem Ventilteller gasdicht verbunden ist. Auf diese Weise kann das allzuströmende gasförmige Medium in die zentrale Öffnung des Ventiltellers eingebracht werden, ohne dass es zu Dichtigkeitsproblemen kommt. Faltenbalge können auch relativ hohe Gasdrücke sicher einschließen, so dass die Anwendbarkeit des Gasventils auch bis zu höheren Drücken gegeben ist.

In einer weiteren vorteilhaften Ausgestaltung ist der Faltenbalg unter Druckvorspannung angeordnet und übt durch seine Vorspannung eine Schließkraft auf den Ventilteller aus. Gerade bei einem Ventilteller, der nahezu vollständig druckausgeglichen ist, muss eine Schließkraft auf den Ventilteller ausgeübt werden, um das Schließen des Gasventils zu gewährleisten. Dazu ist ein elastisches Element erforderlich, das in vorteilhafter Weise in Form des Faltenbalgs verwirklicht werden kann, so dass keine zusätzlichen Bauteile benötigt werden.

In einer weiteren Vorteilhaften Ausgestaltung ist zwischen dem Ventilsitz und dem Ventilteller eine zweite umlaufende Dichtkante radial außerhalb der ersten umlaufenden Dichtkante ausgebildet, wobei die zweite Druckfläche radial außerhalb der zweiten umlaufenden Dichtkante angeordnet ist. Die zweite umlaufende Dichtkante erlaubt es, einen weiteren Strömungsquerschnitt auf- und zuzusteuern, um so die Menge des zumessbaren gasförmigen Mediums durch das Gasventil zu erhöhen, was insbesondere für die Anwendung bei Brennkraftmaschinen, die eine große Menge an gasförmigem Kraftstoff in kurzer Zeit benötigen, von Vorteil ist.

In einer weiteren vorteilhaften Ausgestaltung ist eine dritte umlaufende Dichtkante radial außerhalb der zweiten umlaufenden Dichtkante zwischen dem Ventilsitz und dem Ventilteller ausgebildet, wobei die zweite Druckfläche zwischen der zweiten umlaufenden Dichtkante und der dritten umlaufenden Dichtkante ausgebildet ist. Durch diese Ausbildung von drei, vorzugsweise konzentrischen, umlaufenden Dichtkanten lässt sich zum einen die vom Gasdruck beaufschlagte Fläche in Öffnungsrichtung auf dem Ventilteller sauber begrenzen und damit die pneumatische Kraft, die durch das Gas auf den Ventilteller in Öffnungsrichtung ausgeübt wird. Zum anderen erlaubt die weitere Dichtung, also die dritte umlaufende Dichtkante, einen weiteren Strömungsquerschnitt radial nach außen am Ventilteller vorzusehen, so dass sich die Menge des zumessbaren gasförmigen Mediums weiter erhöht.

In einer weiteren vorteilhaften Ausgestaltung sind die zweite umlaufende Dichtkante oder die dritte umlaufende Dichtkante als umlaufender Steg auf dem Ventilsitz ausgebildet. Es kann auch vorgesehen sein, dass nur eine der beiden Dichtungen als ringförmiger Steg auf dem Ventilsitz ausgebildet ist. Durch die Ausbildung des ringförmigen Stegs auf dem Ventilsitz lässt sich auf dem Ventilteller mit einer flachen Dichtung arbeiten, die sich einerseits leicht fertigen lässt und andererseits mit geringem Aufwand mit einer Beschichtung versehen lässt, beispielsweise mit einem Elastomer.

In einer weiteren vorteilhaften Ausgestaltung ist in der Ventilplatte eine zentrale Bohrung ausgebildet, die der zentralen Öffnung im Ventilteller gegenüberliegt und von der wenigstens eine radiale Bohrung innerhalb der Ventilplatte ausgeht, über die die zweite Druckfläche mit dem gasförmigen Medium beaufschlagt ist. Besonders vorteilhaft ist es dann, wenn wenigstens eine schlitzförmige Öffnung in der Ventilplatte ausgebildet ist, die mit der wenigsten einen radialen Bohrung verbunden ist und über die das gasförmige Medium die zweite Druckfläche beaufschlagt, so dass durch die zentrale Öffnung, die radiale Bohrung und die schlitzförmige Öffnung der Verbindungskanal zwischen der ersten Druckfläche und der zweiten Druckfläche gebildet wird. Diese Ausbildung der Verbindung zwischen den beiden Druckflächen erlaubt es in einfacher und verlässlicher Weise, beide Druckflächen mit dem Gasdruck zu beaufschlagen und dadurch den Kraftausgleich auf den Ventilteller zu realisieren. Das Ausbilden der schlitzförmigen Öffnungen erlaubt es darüber hinaus, eine große Gasmenge durch diese schlitzförmigen Öffnungen bei geöffnetem Gasventil auszuströmen, so dass die Menge, die zugemessen werden kann, entsprechend hoch ist.

In einer weiteren vorteilhaften Ausgestaltung ist eine vorgespannte Schließfeder vorgesehen, die den Ventilteller mit einer Schließkraft in Richtung des Ventilsitzes beaufschlagt. Dies stellt eine zusätzliche oder auch die einzige Schließkraft auf den Ventilteller dar, so dass dieser sicher schließt.

Zur Bewegung des Ventiltellers ist in vorteilhafterweise ein Elektromagnet innerhalb des Gasventils vorgesehen, der eine magnetische Öffnungskraft auf den Ventilteller ausübt, wenn der Elektromagnet bestromt ist. Die Bewegung des Ventiltellers geschieht dann beispielsweise gegen die Kraft der vorgespannten Schließfeder.

Weitere Vorteile und vorteilhafte Ausgestaltungen der Erfindung sind der Beschreibung und der Zeichnung entnehmbar.

### Zeichnung

In der Zeichnung ist ein erfindungsgemäßes Gasventil im Längsschnitt dargestellt, wobei nur die wesentlichen Teile des Gasventils gezeigt sind. Es zeigt
- Figur 1: einen Längsschnitt durch das erfindungsgemäße Gasventil,
- Figur 2: dasselbe Gasventil in einer vergrößerten Darstellung im Bereich der Ventilplatte und
- Figur 3a: und
- Figur 3b: zwei Ansichten der Ventilplatte des in Figur 1 und Figur 2 gezeigten Gasventils.

### Beschreibung des Ausführungsbeispiels

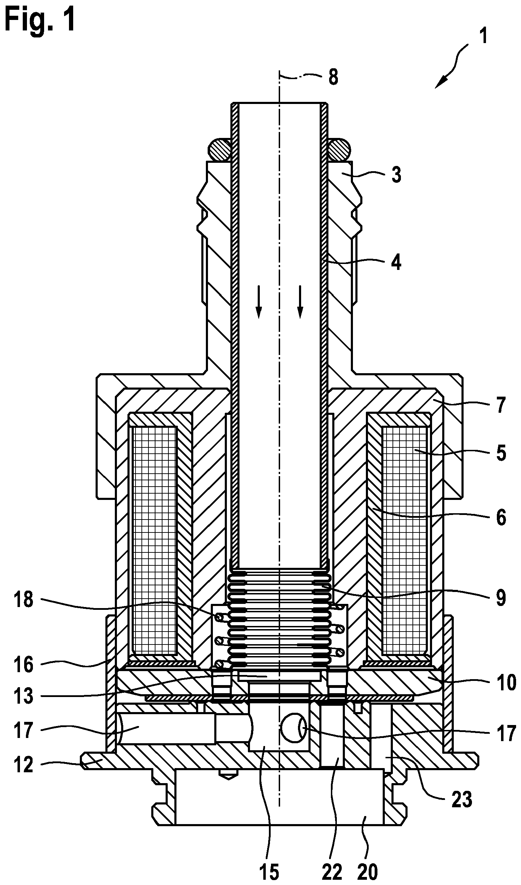

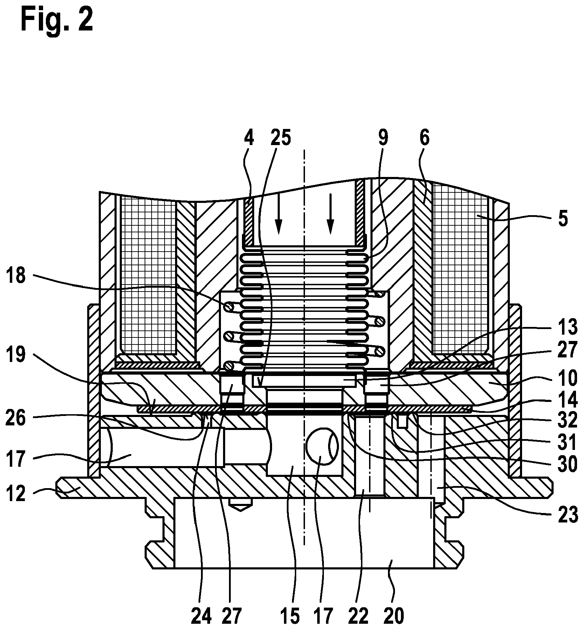

Figur 1 ist ein Längsschnitt durch ein erfindungsgemäßes Gasventil 1 schematisch dargestellt. Das Gasventil 1 weist einen Anschlussstutzen 3 auf, der im Wesentlichen als gestufter Zylinder ausgebildet ist. Innerhalb des Anschlussstutzen 3 ist eine Hülse 4 eingelassen, über die das zu dosierende gasförmige Medium dem Gasventil zugeführt wird, wobei die Strömungsrichtung in Figur 1 mit Pfeilen gekennzeichnet ist. Die Hülse 4 geht an ihrem ausströmseitigen Ende in einen Faltenbalg 9 über, mit dem sie gasdicht verbunden ist. Der Faltenbalg 9 wiederum ist an seiner ausströmseitigen Seite mit einem beweglichen Ventilteller 10 gasdicht verbunden, der bezüglich seiner Längsachse 8, die auch die Längsachse der Hülse 4 bildet, beweglich innerhalb des Gasventils 1 angeordnet ist. Figur 2 zeigt dazu eine vergrößerte Darstellung im Bereich des Ventiltellers 10 der Figur 1.

Im Ventilteller 10 ist eine zentrale Öffnung 13 ausgebildet, wobei der Faltenbalg 9 so mit dem Ventilteller gasdicht verbunden ist, dass das durch die Hülse 4 und den Faltenbalgen 9 strömende Gas auch durch die zentrale Öffnung 13 des Ventiltellers 10 strömt. Im geschlossenen Zustand des Gasventils liegt der Ventilteller 10 auf einem Ventilsitz 19 auf, der an der dem Ventilteller 10 zugewandten Seite einer Ventilplatte 12 ausgebildet ist, die das ausströmseitige Ende des Gasventils 1 bildet. Die Ventilplatte 12 weist an ihrem unteren, dem Ventilteller 10 abgewandten Ende einen Auslass 20 auf, durch den das gasförmige Medium, welches das Gasventil 1 verlässt, aus dem Gasventil 1 strömt. In der Ventilplatte 12 ist eine zentrale Bohrung 15 ausgebildet, die der zentralen Öffnung 13 gegenüberliegt, so dass Gas, das durch die Hülse 4, den Faltenbalg 9 und die zentrale Öffnung 13 strömt, in die zentrale Bohrung 15 der Ventilplatte 12 gelangt. Von der zentralen Bohrung 15 führen drei radiale Bohrungen 17 nach außen und werden an ihrem äußeren Ende von einer Dichthülse 16 verschlossen, die die Ventilplatte 12 umgibt. Die Dichthülse 16 ist dabei gasdicht, beispielsweise durch eine Schweißverbindung, mit der Ventilplatte 12 verbunden.

Die Bewegung des Ventiltellers 10 erfolgt mittels einen Elektromagneten 5, der innerhalb des Gehäuses des Gasventils 1 angeordnet ist und der aus einer Spule 5, einem Spulenträger 6 und einem Joch 7 besteht, welche die Hülse 4 und den Faltenbalgen 9 umgeben. Durch Bestromung des Elektromagneten 5 wird eine anziehende Kraft auf den Ventilteller 10 ausgeübt, die diesen entgegen der Vorspannung des Faltenbalgs 9 vom Ventilsitz 19 wegbewegt. Die Schließbewegung des Ventiltellers 10 erfolgt durch die elastische Kraft des Faltenbalgs oder durch die Kraft einer zusätzlichen Schließfeder 18, wie sie in Figur 2 dargestellt ist. Die Schließfeder umgibt dabei den Faltenbalg 9 und wirkt als zusätzliches oder als alleiniges schließendes Element auf den Federteller 10. In diesem Fall kann die Vorspannung des Faltenbalgs 9 auch unterbleiben bzw. statt des Faltenbalgs 9 ein anderes elastisches Element verwendet werden, das eine gasdichte Verbindung zwischen der Hülse 4 und der zentralen Öffnung 13 des Ventiltellers 10 herstellt.

In der zentralen Öffnung 13 des Ventiltellers 10 ist eine erste Druckfläche 25 ausgebildet, die durch eine Stufung der zentralen Öffnung 13 gebildet wird. Durch diese erste Druckfläche 25 ergibt sich eine Kraft in Richtung des Ventilsitzes 19, die durch den Druck des gasförmigen Mediums auf den Ventilteller 10 ausgeübt wird. Als Gegenkraft ist eine zweite Druckfläche 26 vorgesehen, welche an der gegenüberliegenden Seite des Ventiltellers 10 ausgebildet ist und die über schlitzförmige Öffnungen 24 mit den radialen Bohrungen 17 verbunden ist, so dass das Gas über die zentrale Öffnung 13 im Ventilteller 10, die zentrale Bohrung 15 und die radialen Bohrungen 17 die zweite Druckfläche 26 beaufschlagt. Die beiden Flächen, also die erste Druckfläche 25 und die zweite Druckfläche 26, sind zumindest näherungsweise gleich groß, so dass sich die Kräfte, die durch den Gasdruck des gasförmigen Mediums auf den Ventilteller 10 ausgeübt werden, zumindest näherungsweise aufheben.

Der Ventilsitz 19 ist strukturiert ausgeführt und umfasst eine erste umlaufende Dichtkante 30, die die zentrale Öffnung 13 des Ventiltellers 10 bzw. die zentrale Bohrung 15 der Ventilplatte 12 umgibt, so dass bei Auflage des Ventiltellers 10 auf dem Ventilsitz 19 eine Abdichtung an dieser Stelle erfolgt. In gleicher Weise ist radial außerhalb der ersten umlaufenden Dichtkante 30 eine zweite umlaufende Dichtkante 31 und eine dritte umlaufende Dichtkante 32 am Ventilsitz 19 ausgebildet, wobei die zweite umlaufende Dichtkante 31 und die dritte umlaufende Dichtkante 32 die zweite Druckfläche 26 auf dem Ventilteller 10 begrenzen, wenn der Ventilteller 10 in Anlage am Ventilteller 19 ist. Zur besseren Abdichtung an den umlaufenden Dichtkanten 30, 31, 32 ist auf der der Ventilplatte 12 zugewandten Seite des Ventiltellers 10 eine Dichtung 14 aufgebracht, beispielsweise ein Elastomer, so dass ohne eine große Anpresskraft des Ventiltellers 10 eine sichere Dichtung an den umlaufenden Dichtkanten 30, 31, 32 erfolgt.

Zur Weiterleitung des gasförmigen Kraftstoffs sind in der Ventilplatte 12 mehrere Auslassöffnungen vorgesehen. Zum einen sind innere Auslassöffnungen 22 ausgebildet, die die Ventilplatte 12 durchdringen und die in Kontakt mit Öffnungen 27 stehen, die im Ventilteller 10 ausgebildet sind. Zum anderen sind äußere Auslassöffnungen 23 vorgesehen, die radial außerhalb der inneren Auslassöffnungen 22 als durchgängige Bohrungen in der Ventilplatte 12 ausgebildet sind, wobei sowohl die inneren Auslassöffnungen 22 als auch die äußeren Auslassöffnungen 23 in den Auslass 20 einer Ventilplatte 12 münden.

### Die Funktionsweise des Gasventils ist wie folgt:

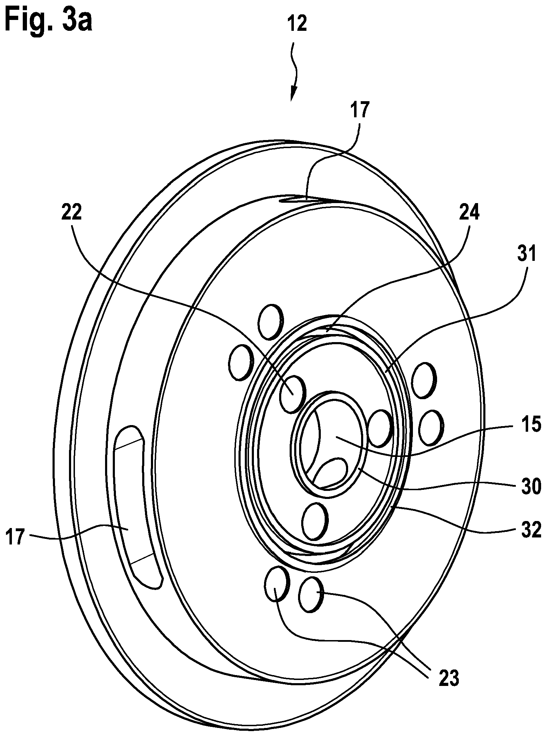

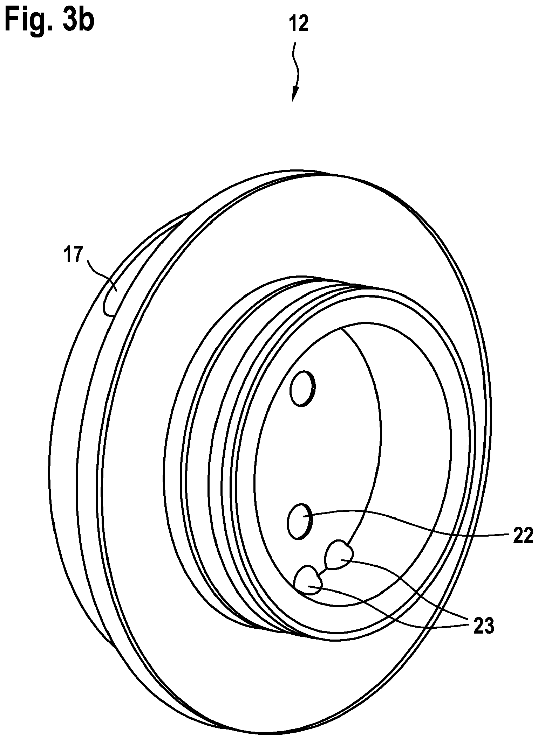

Zu Beginn der Eindüsung des gasförmigem Mediums ist der Ventilteller 10 in seiner Schließstellung, d. h. in Anlage am Ventilsitz 19, so dass eine gasdichte Abdichtung an der ersten umlaufenden Dichtkante 30, der zweiten umlaufenden Dichtkante 31 und dritten umlaufenden Dichtkante 32 erfolgt. Das durch die Hülse 4 einströmende gasförmige Medium gelangt über den Faltenbalg 9 in die zentrale Öffnung 13 des Ventiltellers 10. Von dort strömt das gasförmige Medium über die zentrale Bohrung 15 der Ventilplatte 12 und die radialen Bohrungen 17 in die schlitzförmigen Öffnungen 24 der Ventilplatte 12. Der Ventilteller 10 wird entweder durch die Kraft des vorgespannten Faltenbalgs 9 oder durch die Kraft einer Schließfeder 18 gegen den Ventilsitz 19 gedrückt, wobei auch vorgesehen sein kann, dass die Schließfeder 18 entfällt, wenn die notwendige Schließkraft allein durch den Faltenbalg 9 aufgebracht werden kann. Soll eine Eindüsung von gasförmigem Medium geschehen, so wird der Elektromagnet 5 bestromt und zieht den Ventilteller 10 vom Ventilsitz 19 weg. Dadurch werden alle drei umlaufenden Dichtkanten 30, 31, 32 gleichzeitig geöffnet, so dass sich verschiedene Strömungspfade öffnen:
- Der Strömungspfad aus der zentralen Öffnung 13 bzw. der zentralen Bohrung 15 über die erste umlaufende Dichtkante 30 radial nach außen in die inneren Auslassöffnungen 22. In der Ventilplatte 12 sind in dem dargestellten Ausführungsbeispiel drei innere Auslassöffnungen 22 vorgesehen. Das Gas strömt durch die inneren Auslassöffnungen 22 in den Auslass 20 der Ventilplatte 12 und gelangt von dort zu seinem vorgesehenen Bestimmungsort. Dazu zeigt Figur 3a nochmals die Ventilplatte 12 in einer perspektivischen Darstellung, wobei die Figur 3a eine Sicht auf die Dichtfläche 19 zeigt und Figur 3b die gegenüberliegende Seite der Ventilplatte 12.
- Ein weiterer Strömungspfad öffnet sich an der zweiten umlaufenden Dichtkante 31, wobei das Gas durch die schlitzförmigen Ausnehmungen 24 strömt und dann radial nach innen über die zweite umlaufende Dichtkante und von dort ebenfalls in die inneren Auslassöffnungen 22.
- Ein weiterer Strömungspfad öffnet sich ausgehend von den schlitzförmigen Ausnehmungen 24 radial nach außen an der dritten umlaufenden Dichtkante 32, wobei das hier strömende Gas durch die äußeren Auslassöffnungen 23 strömt, von denen in der Ventilplatte 12 sechs Auslassöffnungen 23 vorgesehen sind, angeordnet zu drei Paaren, und gelangt von dort in den Auslass 20. Auf diese Weise wird ein Strömungsquerschnitt aufgesteuert, der im Wesentlichen durch den Querschnitt der drei inneren Auslassöffnungen 22 und der sechs äußeren Auslassöffnungen 23 gegeben ist.

Die dargestellte Anzahl und der Durchmesser der inneren Auslassöffnungen 22 bzw. der äußeren Auslassöffnungen 23 kann variiert werden und an die Erfordernisse angepasst werden. So können mehr oder weniger solcher Auslassöffnungen 22, 23 vorgesehen sein, auch die Anordnung kann variiert werden. Die Anzahl und der Durchmesser dieser Auslassöffnungen 22, 23 ist auch den aufgesteuerten Strömungsquerschnitt an den umlaufenden Dichtkanten 30, 31, 32 limitiert.

Damit auf den Ventilteller 10 keine zusätzlichen Kräfte durch das ausströmende gasförmige Medium ausgeübt werden, sind im Ventilteller 10 Öffnungen 27 vorgesehen, die in dem Bereich ausgebildet sind, in dem auch die Schließfeder 18 auf dem Ventilteller 10 aufliegt. Diese Öffnungen 27 dienen nur dem Druckausgleich, führen aber auch zu einer Gasbeaufschlagung des Faltenbalgs 9 auf seiner Außenseite, wobei der Druck in diesem Bereich stets geringer ist als innerhalb der Hülse 4, durch die das gasförmige Medium dem Gasventil zugeführt wird. Der Raum, der den Faltenbalg 9 und die Hülse 4 umgibt, ist dabei gasdicht verbunden, einerseits durch eine Schweißverbindung der Dichthülse 16 zum Joch 7 des Elektromagneten und andererseits durch eine Schweißverbindung oder eine ähnlich gasdichte Verbindung zwischen dem Joch 7 und der Hülse 4 am oberen Ende des Elektromagneten 5.

An der dem Ventilsitz 19 zugewandten Seite des Ventiltellers 10 kann, wie schon erwähnt, eine Dichtung 14 vorgesehen sein, die beispielsweise aus einem Elastomer besteht. Es sind jedoch auch andere Dichtungen möglich, beispielsweise aus einem weichen Metall, wie Kupfer oder Zinn, oder die Dichtung 14 kann ganz entfallen, wenn das Gasventil auch ohne diese ausreichend dicht ist.

Die umlaufenden Dichtkanten 30, 31, 32 sind durch Stege auf der Dichtfläche 19 ausgebildet, die ringförmig umlaufend sind, wie es insbesondere in Figur 3a anschaulich dargestellt ist. Statt der Ausbildung dieser Stege auf der Dichtfläche 19 kann es auch vorgesehen sein, dass die Dichtfläche 19 eben ausgebildet ist und die ringförmigen Stege auf dem Ventilteller 10 ausgebildet sind, die die gleiche Funktion erfüllen. In diesem Fall kann es auch vorgesehen sein, dass auf der Dichtfläche 19 eine Dichtung aufgebracht ist, die wie oben bereits erwähnt, ein aus einem Elastomer oder einem anderen weichen Material sein kann.

## Patentansprüche

1. Gasventil, insbesondere Dosierventil für ein gasförmiges Medium, mit einem Ventilteller (10), der im Gasventil bezüglich einer Längsachse (8) bewegbar angeordnet ist, und mit einer Ventilplatte (12) mit einem daran ausgebildeten Ventilsitz (19), wobei der Ventilteller (10) mit dem Ventilsitz (19) zum Öffnen und Schließen des Gasventils zusammenwirkt, und mit einer ersten umlaufenden Dichtkante (30) zwischen dem Ventilsitz (19) und dem Ventilteller (10), **dadurch gekennzeichnet, dass** der Ventilteller (10) eine zentrale Öffnung (13) zur Durchführung des gasförmigen Mediums aufweist, wobei die erste umlaufende Dichtkante (30) die zentrale Öffnung (13) umgibt und wobei in der zentralen Öffnung (13) eine erste, vom gasförmigen Medium in Schließrichtung beaufschlagte Druckfläche (25) ausgebildet ist, und mit einer zweiten Druckfläche (26) am Ventilteller (10), die radial außerhalb der ersten umlaufenden Dichtkante (30) ausgebildet ist und die ebenfalls vom gasförmigen Medium beaufschlagt ist, und mit einem Verbindungskanal (15; 17; 24), der die erste Druckfläche (25) und die zweite Druckfläche (26) verbindet und der in der Ventilplatte (12) ausgebildet ist, wobei die beiden Druckflächen (25; 26) am Ventilteller (10) einander gegenüber stehen, so dass die durch das gasförmige Medium auf die Druckflächen (25; 26) ausgeübten Kräfte in Bewegungsrichtung des Ventiltellers (10) einander entgegen gerichtet sind und sich zumindest näherungsweise aufheben.

2. Gasventil nach Anspruch 1, **dadurch gekennzeichnet, dass** die umlaufende Dichtkante (30) als ein auf dem Ventilsitz (19) angeordneter Steg ausgebildet ist.

3. Gasventil nach Anspruch 1, **dadurch gekennzeichnet, dass** das gasförmige Medium über eine flexible Zuleitung (9) in die zentrale Öffnung (13) strömt.

4. Gasventil nach Anspruch 3, **dadurch gekennzeichnet, dass** die flexible Zuleitung durch einen Faltenbalg (9) gebildet ist, der mit dem Ventilteller (10) gasdicht verbunden ist.

5. Gasventil nach Anspruch 4, **dadurch gekennzeichnet, dass** der Faltenbalg (9) unter Druckvorspannung angeordnet ist und durch seine Vorspannung eine Schließkraft auf den Ventilteller (10) ausübt.

6. Gasventil nach einem der Ansprüche 1 bis 5, **dadurch gekennzeichnet, dass** zwischen dem Ventilsitz (19) und dem Ventilteller (10) eine zweite umlaufende Dichtkante (31) radial außerhalb der ersten umlaufenden Dichtkante (30) ausgebildet ist, wobei die zweite Druckfläche (26) radial außerhalb der zweiten umlaufenden Dichtkante (31) angeordnet ist.

7. Gasventil nach Anspruch 6, **dadurch gekennzeichnet, dass** eine dritte umlaufende Dichtkante (32) radial außerhalb der zweiten umlaufenden Dichtkante (31) zwischen dem Ventilsitz (19) und dem Ventilteller (10) ausgebildet ist, wobei die zweite Druckfläche (26) zwischen der zweiten umlaufenden Dichtkante (31) und der dritten umlaufenden Dichtkante (32) ausgebildet ist.

8. Gasventil nach Anspruch 6, **dadurch gekennzeichnet, dass** die zweite umlaufende Dichtkante (31) und/oder die dritte umlaufende Dichtkante (32) als umlaufender Steg auf dem Ventilsitz (19) ausgebildet sind/ist.

9. Gasventil nach einem der vorstehenden Ansprüche, **dadurch gekennzeichnet, dass** in der Ventilplatte (12) eine zentrale Bohrung (15) ausgebildet ist, die der zentralen Öffnung (13) im Ventilteller (10) gegenüber liegt und von der wenigstens eine radiale Bohrung (17) innerhalb der Ventilplatte (12) ausgeht, über die die zweite Druckfläche (26) mit dem gasförmigen Medium beaufschlagt ist.

10. Gasventil nach Anspruch 9, **dadurch gekennzeichnet, dass** in der Ventilplatte (12) wenigstens eine schlitzförmige Öffnung (24) ausgebildet ist, die mit der wenigstens einen radialen Bohrung (17) verbunden ist und über die das gasförmige Medium die zweite Druckfläche (26) beaufschlagt, so dass durch die zentrale Öffnung (15), die radiale Bohrung (17) und die schlitzförmige Öffnung (24) der Verbindungskanal zwischen der ersten Druckfläche (25) und der zweiten Druckfläche (26) gebildet wird.

11. Gasventil nach einem der Ansprüche 1 bis 10, **dadurch gekennzeichnet, dass** eine vorgespannte Schließfeder (18) vorgesehen ist, die den Ventilteller (10) mit einer Schließkraft in Richtung des Ventilsitzes (19) beaufschlagt.

12. Gasventil nach einem der Ansprüche 1 bis 11, **dadurch gekennzeichnet, dass** ein Elektromagnet (5; 6) vorgesehen ist, der bei Bestromung eine magnetische Öffnungskraft auf den Ventilteller (10) ausübt und diesen vom Ventilsitz (19) wegbewegt.

13. Gasventil nach einem der Ansprüche 1 bis 12, **dadurch gekennzeichnet, dass** auf dem Ventilteller (10) oder auf dem Ventilsitz (19) eine Beschichtung aus dem elastischen Material aufgebracht ist, vorzugsweise aus deinem Elastomer.

## Claims

1. Gas valve, in particular a metering valve for a gaseous medium, with a valve disc (10) which is arranged moveably in the gas valve relative to a longitudinal axis (8), and with a valve plate (12) with valve seat (19) formed thereon, wherein the valve disc (10) cooperates with the valve seat (19) to open and close the gas valve, and with a first circumferential sealing edge (30) between the valve seat (19) and valve disc (10), **characterized in that** the valve disc (10) has a central opening (13) for passage of gaseous medium, wherein the first circumferential sealing edge (30) surrounds the central opening (13) and wherein a first pressure face (25) is formed in the central opening (13) which is pressurized in the closing direction by the gaseous medium, and with a second pressure face (26) on the valve disc (10) which is formed radially outside the first circumferential sealing edge (30) and is also pressurized by the gaseous medium, and with a connecting channel (15; 17; 24) which connects the first pressure face (25) and the second pressure face (26) and is formed in the valve plate (12), wherein the two pressure forces (25; 26) on the valve disc (10) are opposite each other, so that the forces exerted by the gaseous medium on the pressure forces (25; 26) are directed against each other in the movement direction of the valve disc (10) and at least approximately cancel each other out.

2. Gas valve according to Claim 1, **characterized in that** the circumferential sealing edge (30) is formed as a web arranged on the valve seat (19).

3. Gas valve according to Claim 1, **characterized in that** the gaseous medium flows into the central opening (13) via a flexible supply line (9).

4. Gas valve according to Claim 3, **characterized in that** the flexible supply line is formed by a bellows (9) which is connected gas-tightly to the valve disc (10).

5. Gas valve according to Claim 4, **characterized in that** the bellows (9) is arranged pre-compressed and by its pretension exerts a closing force on the valve disc (10).

6. Gas valve according to any of Claims 1 to 5, **characterized in that** a second circumferential sealing edge (31) is arranged between the valve seat (19) and the valve disc (10), radially outside the first circumferential sealing edge (30), wherein the second pressure face (26) is arranged radially outside the second circumferential sealing edge (31).

7. Gas valve according to Claim 6, **characterized in that** a third circumferential sealing edge (32) is formed between the valve seat (19) and the valve disc (10), radially outside the second circumferential sealing edge (31), wherein the second pressure face (26) is formed between the second circumferential sealing edge (31) and the third circumferential sealing edge (32).

8. Gas valve according to Claim 6, **characterized in that** the second circumferential sealing edge (31) and/or the third circumferential sealing edge (32) are/is formed as a circumferential web on the valve seat (19).

9. Gas valve according to any of the preceding claims, **characterized in that** a central bore (15) is formed in the valve plate (12) which lies opposite the central opening (13) in the valve plate (10) and from which at least one radial bore (17) departs inside the valve plate (12), via which the second pressure face (26) is pressurized with gaseous medium.

10. Gas valve according to Claim 9, **characterized in that** at least one slot-like opening (24) is formed in the valve plate (12) which is connected to the at least one radial bore (17) and via which the gaseous medium pressurizes the second pressure face (26), so that the central opening (15), the radial bore (17) and the slot-like opening (24) form the connecting channel between the first pressure face (25) and the second pressure face (26) .

11. Gas valve according to any of Claims 1 to 10, **characterized in that** a pretensioned closing spring (18) is provided which pressurizes the valve disc (10) with a closing force in the direction of the valve seat (19).

12. Gas valve according to any of Claims 1 to 11, **characterized in that** an electromagnet (5, 6) is provided which, when powered, exerts a magnetic opening force on the valve disc (10) and moves this away from the valve seat (19).

13. Gas valve according to any of Claims 1 to 12, **characterized in that** a coating of an elastic material, preferably an elastomer, is applied to the valve disc (10) or the valve seat (19).

## Revendications

1. Soupape à gaz, en particulier soupape de dosage pour un milieu gazeux, comprenant un plateau de soupape (10) qui est disposé de manière déplaçable dans la soupape à gaz par rapport à un axe longitudinal (8), et comprenant une plaque de soupape (12) avec un siège de soupape (19) réalisé sur celle-ci, le plateau de soupape (10) coopérant avec le siège de soupape (19) pour ouvrir et fermer la soupape à gaz, et comprenant une première arête d'étanchéité périphérique (30) entre le siège de soupape (19) et le plateau de soupape (10), **caractérisée en ce que** le plateau de soupape (10) présente une ouverture centrale (13) pour le passage du milieu gazeux, la première arête d'étanchéité périphérique (30) entourant l'ouverture centrale (13) et une première surface de pression (25) sollicitée par le milieu gazeux dans la direction de fermeture étant réalisée dans l'ouverture centrale (13), et comprenant une deuxième surface de pression (26) sur le plateau de soupape (10), laquelle est réalisée radialement à l'extérieur de la première arête d'étanchéité périphérique (30) et est également sollicitée par le milieu gazeux, et comprenant un canal de liaison (15 ; 17 ; 24) qui relie la première surface de pression (25) et la deuxième surface de pression (26) et qui est réalisé dans la plaque de soupape (12), les deux surfaces de pression (25 ; 26) étant opposées l'une à l'autre sur le plateau de soupape (10) de telle sorte que les forces exercées par le milieu gazeux sur les surfaces de pression (25 ; 26) soient orientées à l'opposé l'une de l'autre dans la direction de déplacement du plateau de soupape (10) et s'annulent au moins approximativement.

2. Soupape à gaz selon la revendication 1, **caractérisée en ce que** l'arête d'étanchéité périphérique (30) est réalisée sous forme de nervure disposée sur le siège de soupape (19).

3. Soupape à gaz selon la revendication 1, **caractérisée en ce que** le milieu gazeux s'écoule par le biais d'une conduite d'alimentation flexible (9) dans l'ouverture centrale (13).

4. Soupape à gaz selon la revendication 3, **caractérisée en ce que** la conduite d'alimentation flexible est formée par un soufflet (9) qui est connecté de manière étanche aux gaz au plateau de soupape (10).

5. Soupape à gaz selon la revendication 4, **caractérisée en ce que** le soufflet (9) est soumis à une précontrainte de pression et exerce une force de fermeture sur le plateau de soupape (10) avec sa précontrainte.

6. Soupape à gaz selon l'une quelconque des revendications 1 à 5, **caractérisée en ce qu'**entre le siège de soupape (19) et le plateau de soupape (10) est réalisée une deuxième arête d'étanchéité périphérique (31) radialement à l'extérieur de la première arête d'étanchéité périphérique (30), la deuxième surface de pression (26) étant disposée radialement à l'extérieur de la deuxième arête d'étanchéité périphérique (31).

7. Soupape à gaz selon la revendication 6, **caractérisée en ce qu'**une troisième arête d'étanchéité (32) est réalisée radialement à l'extérieur de la deuxième arête d'étanchéité périphérique (31) entre le siège de soupape (19) et le plateau de soupape (10), la deuxième surface d'étanchéité (26) étant réalisée entre la deuxième arête d'étanchéité périphérique (31) et la troisième arête d'étanchéité périphérique (32).

8. Soupape à gaz selon la revendication 6, **caractérisée en ce que** la deuxième arête d'étanchéité (31) et/ou la troisième arête d'étanchéité (32) est/sont réalisées en tant que nervure périphérique sur le siège de soupape (19).

9. Soupape à gaz selon l'une quelconque des revendications précédentes, **caractérisée en ce qu'**un alésage central (15) est réalisé dans la plaque de soupape (12), lequel est opposé à l'ouverture centrale (13) dans le plateau de soupape (10) et part de l'au moins un alésage radial (17) à l'intérieur de la plaque de soupape (12), par le biais duquel la deuxième surface de pression (26) est sollicitée avec le milieu gazeux.

10. Soupape à gaz selon la revendication 9, **caractérisée en ce que** dans la plaque de soupape (12) est réalisée au moins une ouverture en forme de fente (24), qui est connectée à l'au moins un alésage radial (17) et par le biais de laquelle le milieu gazeux sollicite la deuxième surface de pression (26), de telle sorte que par l'ouverture centrale (15), l'alésage radial (17) et l'ouverture en forme de fente (24), le canal de liaison entre la première surface de pression (25) et la deuxième surface de pression (26) soit formé.

11. Soupape à gaz selon l'une quelconque des revendications 1 à 10, **caractérisée en ce qu'**un ressort de fermeture précontraint (18) est prévu, lequel sollicite le plateau de soupape (10) avec une force de fermeture dans la direction du siège de soupape (19).

12. Soupape à gaz selon l'une quelconque des revendications 1 à 11, **caractérisée en ce qu'**un électroaimant (5 ; 6) est prévu, lequel, lors d'une alimentation en courant, exerce une force d'ouverture magnétique sur le plateau de soupape (10) et écarte celui-ci du siège de soupape (19).

13. Soupape à gaz selon l'une quelconque des revendications 1 à 12, **caractérisée en ce qu'**un revêtement en matériau élastique, de préférence en élastomère, est appliqué sur le plateau de soupape (10) ou sur le siège de soupape (19).
